# FASCICULE DE BREVET EUROPEEN

(11) **EP 1 005 242 B1**
(45) Date de publication et mention de la délivrance du brevet: **06.09.2006**
(21) Numéro de dépôt: 99402860.3
(22) Date de dépôt: 18.11.1999
(51) Int. Cl.: H04Q 7/32

(54) **Procédé pour économiser la batterie de téléphones mobiles lors de communications verbales**
Verfahren zum Batteriesparen in der mobilen Sprachkommunikationen
Battery saving method in mobile voice communications

(30) Priorité: 26.11.1998 FR 9814877
(43) Date de publication de la demande: 31.05.2000
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Parisel, Arnaud, 75017 Paris (FR); Dugast, Xavier, 78400 Chatou (FR)
(74) Mandataire: Feray, Valérie

(56) Documents cités:
- EP-A- 0 648 032
- EP-A- 0 782 277
- WO-A-98/13949
- HANZO L ET AL: "THE PAN-EUROPEAN MOBILE RADIO SYSTEM PART II TELECOMMUNICATION SYSTEMS" EUROPEAN TRANSACTIONS ON TELECOMMUNICATIONS AND RELATED TECHNOLOGIES,IT,AEI, MILANO, vol. 5, no. 2, - 1994 page 261-276 XP000453467 ISSN: 1120-3862

## Description

La présente invention a pour objet un procédé de réception de signaux de parole transmis par une station de base à un téléphone mobile, notamment de type GSM. Elle vise surtout à réduire la consommation des téléphones mobiles, lorsqu'ils sont en communication mais que le correspond reste silencieux.

Dans le domaine de la téléphonie mobile, l'aptitude d'un poste téléphonique à rester en veille, ou disponible longtemps, est essentiellement liée à l'énergie stockée dans sa batterie d'une part et à sa consommation d'autre part. L'énergie stockable dans la batterie étant limitée, l'essentiel d'une économie de consommation est réalisé en choisissant d'une part des composants peu dissipatifs, et d'autre part en mettant en veille, le plus souvent possible le téléphone mobile. La mise en veille, quand elle est possible comporte l'arrêt de l'alimentation de circuits annexes du téléphone mobile. Parmi ces circuits annexes, on distingue le clavier, l'écran, l'émetteur et le récepteur essentiellement. En ce qui concerne le microprocesseur qui organise le fonctionnement du téléphone mobile, on prévoit par ailleurs de réduire la fréquence de son horloge de cadencement. Typiquement la fréquence de celle-ci peut passer de quelques MHz à quelques dizaines de KHz. Ceci induit une réduction significative de la consommation d'énergie. Cependant ceci n'est pas suffisant.

En effet les téléphones mobiles disponibles actuellement ont une autonomie comprise entre une soixantaine et une centaine d'heures en veille fixe. C'est-à-dire que l'autonomie est bien moindre lorsque le téléphone mobile est en émission et en déplacement pour assurer une communication. Dans les deux cas le téléphone mobile doit néanmoins être disponible pour recevoir des signaux de parole ou de signalisation. Quand le téléphone mobile est en veille (lorsqu'il n'est pas en communication), il doit recevoir des signaux de signalisation qui sont susceptibles de lui signaler l'irruption d'un appel entrant : lorsque quelqu'un cherche à entrer en communication avec lui depuis une station de base. Le téléphone mobile doit donc recevoir régulièrement des signaux de signalisation qui lui signalent d'une part à quel moment, à quel rendez-vous temporel, une prochaine information d'une éventuelle connexion lui sera communiquée, et d'autre part s'il est actuellement sollicité par un interlocuteur pour entrer immédiatement en communication. La consommation électrique occasionnée par ces réceptions limite l'autonomie de la durée de veille évoquée ci-dessus.

Un tel problème est résolu par la solution technique exposé, par exemple, dans le demande de brevet WO 98/13949, dans laquelle on utilise la forte redondance des signaux de signalisation pour se permettre de n'en recevoir qu'une partie dans le cas favorable et, ce faisant, pouvoir mettre le téléphone mobile en veille durant une durée importante.

Dans la phase de communication, il peut arriver que le téléphone n'ait pas à émettre. Toutefois, qu'il émette ou qu'il n'émette pas, le téléphone mobile doit écouter en permanence les signaux de parole en provenance de l'interlocuteur distant. Il est alors possible que cet interlocuteur distant soit silencieux pendant quelques instants. On estime ainsi que, dans une communication normale, l'utilisateur d'un téléphone mobile n'utilise son téléphone mobile pour émettre que pendant la moitié du temps. Par contre pendant tout le temps de la communication le téléphone mobile doit écouter. Si pendant cette écoute, et éventuellement même pendant que le téléphone mobile lui-même émet, l'autre interlocuteur est silencieux, il convient de limiter la consommation liée à l'écoute alors que l'interlocuteur distant est silencieux.

Il est connu à cet effet une technique dite DTX pour Discontinuous Transmission (Transmission Discontinue) selon laquelle la station de base qui est en relation avec le téléphone mobile émet des signaux de signalisation dits signaux SID, SID signifie Silence Identification Data, correspondants à une telle situation. Il pourrait être envisageable d'utiliser ces signaux dits SID pour mettre le téléphone mobile en veille, à basse consommation dans le mode réception, jusqu'à une prochaine réception de signaux SID. Cependant, une telle démarche n'est pas praticable parce que l'interlocuteur distant est susceptible de reprendre sa conversation avec le téléphone mobile à n'importe quel moment. Il est donc nécessaire en définitive d'écouter, entre les dates de réception de ces signaux SID, si cet interlocuteur n'a pas recommencé à parler. Ceci conduit à une consommation supplémentaire d'énergie.

Dans l'invention, partant du fait que la réduction de consommation était insuffisante on a cherché à la réduire encore. On y est alors parvenu en constatant que les informations à envoyer à un téléphone mobile étaient d'une part codées sur des blocs de bits de longueur donnée. Les bits de ces blocs de bits sont ainsi répartis sur plusieurs fenêtres dans plusieurs trames successives pour être acheminés jusqu'à leur destinataire.

Dans l'invention dans ces conditions, on choisit de recevoir au cours d'une première trame les signaux de parole émis dans une première fenêtre temporelle au cours de cette première trame. Leur réception comporte leur démodulation et éventuellement leur décodage et donc dans ce cas la mise en service de toute la chaîne de réception. Celle-ci comporte un ou des oscillateurs commandés en tension pour la réception et la démodulation des signaux reçus en bande de base. La chaîne de réception comporte aussi un processeur de traitement pour le décodage des bits reçus, notamment un décodage dit de Viterbi. Dans l'invention on ne fera intervenir le décodage que si la démodulation est correcte. Le cas échéant, on fait l'économie de l'énergie non négligeable pour mettre en oeuvre le processeur de traitement. Une fois que ceci est accompli pour des signaux de signalisation d'une première fenêtre temporelle au moins, on regarde leur signification. Avant qu'une prochaine fenêtre temporelle ne se présente, en principe avec un même rang dans une trame suivante, on configure le téléphone mobile pour recevoir ou non les deuxièmes signaux de signalisation ou de parole qui y correspondent.

Bien entendu quand on ne les reçoit pas, on n'active ni démodulation ni le traitement de telle sorte qu'une économie d'énergie substantielle est réalisée.

Plus précisément, l'invention a pour objet un procédé de réception de signaux de paroles dans un téléphone mobile, tel que défini dans la revendication 1.

Le cas échéant, on refait le même traitement pour une fenêtre temporelle suivante.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un téléphone mobile muni des moyens de mettre en oeuvre le procédé de l'invention ;
- Figures 2 : diagramme temporel de signaux de parole échangés entre une station de base et un téléphone mobile et qui sont pris en compte dans l'invention ;
- Figure 3 : un organigramme d'étapes selon le procédé de l'invention.

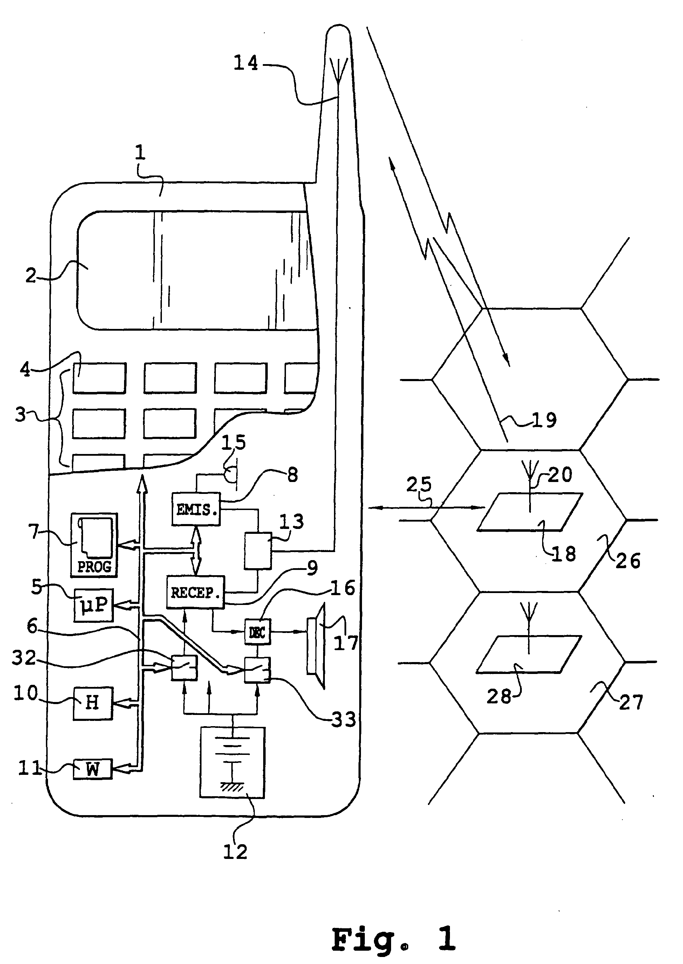

La figure 1 montre un téléphone mobile 1 utilisable pour mettre en oeuvre le procédé de l'invention. Celui-ci comporte essentiellement, dans un boîtier, d'une manière connue un écran 2 et un clavier 3 avec des boutons de commande 4 pour utiliser le téléphone mobile en fonction du besoin. Sur le plan fonctionnel le téléphone mobile comporte un circuit électronique muni d'un microprocesseur 5 relié par un bus 6 de données, d'adresses et de commandes à l'écran 2, aux boutons 3, à une mémoire programme 7 et à un ensemble de circuits d'émission 8 et de réception 9. Sur le plan pratique le bus 6 est encore relié à une horloge 10 et à une mémoire de travail 11, par exemple du type statique ou dynamique. Une alimentation 12 alimente électriquement les différents circuits. Elle est constituée par la batterie du téléphone mobile. C'est elle qui limite l'autonomie de ce dernier.

En émission ou en réception les circuits 8 et 9 sont en relation, notamment par l'intermédiaire d'un duplexeur 13 avec un aérien d'émission-réception 14. Les circuits d'émission reçoivent les signaux à émettre d'un microphone 15. Les circuits de réception sont en relation avec un décodeur 16 de réception, lui-même en relation avec un haut-parleur 17. La représentation du microphone 15 et du haut-parleur 17 est ici symbolique. Le téléphone mobile peut en effet servir pour envoyer les télécopies ou même des données s'il est relié à un micro-ordinateur. Dans ce cas le microphone 15 et le haut-parleur 17 seront remplacés par une interface, non représentée, du téléphone mobile avec ce micro-ordinateur. Cette interface est aussi sous le contrôle du microprocesseur 5 par l'intermédiaire du bus 6. Cette description n'est qu'un exemple d'architecture fonctionnelle d'un téléphone mobile. D'autres réalisations sont envisageables, notamment tous les téléphones mobiles n'ont pas de duplexeur mais des filtres à la place.

Le téléphone mobile 1 est en relation avec une station de base 18 d'un réseau de téléphonie mobile géré par un opérateur. La station de base 18 envoie, pour ce qui concerne l'invention des signaux de parole et/ou de signalisation 19 au téléphone mobile. Dans l'invention c'est la réception de ces signaux 19 qui est traitée d'une manière particulière afin de réduire la consommation d'énergie.

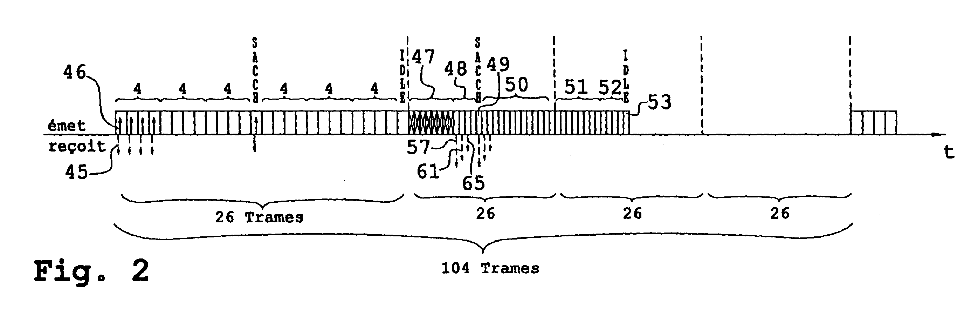

La figure 2 montre, alors que le téléphone mobile est en communication, le protocole adopté pour tenir compte des silences. Des signaux, transmis sur un canal dit BCCH (Broadcast Control Channel), ont préalablement attribué à la relation entre un téléphone mobile 1 et une station de base 18, une fenêtre temporelle 45 au cours de chaque trame pour que le téléphone mobile reçoive des signaux de parole (ou autre) en provenance de la station de base. Une fenêtre temporelle 46, décalée (dans une même trame que celle de la fenêtre temporelle 45) de deux fenêtres temporelles, permet au téléphone mobile d'émettre des signaux de parole (ou autre) à destination de la station de base.

La figure 2 montre en tirets les signaux reçus pendant la fenêtre 45 alors qu'elle montre en trait plein les signaux émis pendant la fenêtre 46 dans une même trame. L'économie d'énergie est réalisée immédiatement, en émission, si le porteur du téléphone mobile ne parle pas. Dans ce cas les fenêtres temporelles 46 ne donnent lieu à aucune émission.

Par contre, pour les fenêtres temporelles 45 correspondant à la réception, même si l'interlocuteur distant ne parle pas, le téléphone mobile doit se réveiller et se mettre en écoute des fenêtres 45, dans chaque trame, pour saisir l'éventualité d'une reprise de dialogue par l'interlocuteur distant.

Cette écoute pendant les fenêtres temporelles 45 est, elle, aussi coûteuse en énergie, même si la dépense dans ce cas est inférieure à celle constatée lors de la veille permanente.

Dans l'invention on se sert du fait que les signaux de parole émis sont codés sur des blocs et sont répartis sur quatre fenêtres temporelles dans quatre trames successives. Ainsi, il est connu lorsque l'interlocuteur distant est silencieux de constituer un protocole dit DTX dans lequel on adopte une périodicité de 104 trames divisées en quatre groupes de 26 trames chacun. Chaque groupe comporte un sous-groupe 47 de huit trames successives utilisées pour envoyer des signaux de type SID qui permettent au téléphone mobile (qui est obligé de les recevoir) de se mettre dans un mode de fonctionnement correspondant, c'est-à-dire notamment avec économie d'énergie. Ce protocole comporte encore un sous-groupe 48 de quatre trames successives sensées transporter des signaux de paroles, mais qui en pratique ne transportent rien si la liaison est silencieuse de la part de l'émetteur. Le sous-groupe 48 est suivi d'une fenêtre temporelle dans une trame dite SACCH dont la signification est Slow Associated Control CHannel c'est-à-dire Canal de Commande Associé à un Trafic Lent. Pendant cette fenêtre temporelle, la station de base donne au téléphone mobile la liste des stations de base voisines, 28, que le téléphone mobile doit surveiller. Pendant cette fenêtre temporelle également le téléphone mobile remonte vers la station de base des informations de mesure concernant ces stations de base voisines et qu'il a préalablement effectué. Ces mesures sont essentiellement des mesures de niveau de signal reçu.

Après la fenêtre temporelle 49 de type SACCH, suivent trois sous-groupes de trames 50 à 52 du même type que le sous-groupe 48. L'invention se préoccupe de ce qui se passe pendant la réception des fenêtres temporelles des sous-groupes de trames 48, 50, 51 et 52. Un groupe de 26 trames est par ailleurs terminé par une fenêtre temporelle dans une trame 53 dite IDLE, qui signifie oisif. Pendant la fenêtre temporelle de la trame 53, le téléphone mobile est chargé d'effectuer des recherches FCH, SCH sur des stations de base voisines et dont il doit remonter les résultats pendant la fenêtre temporelle 49.

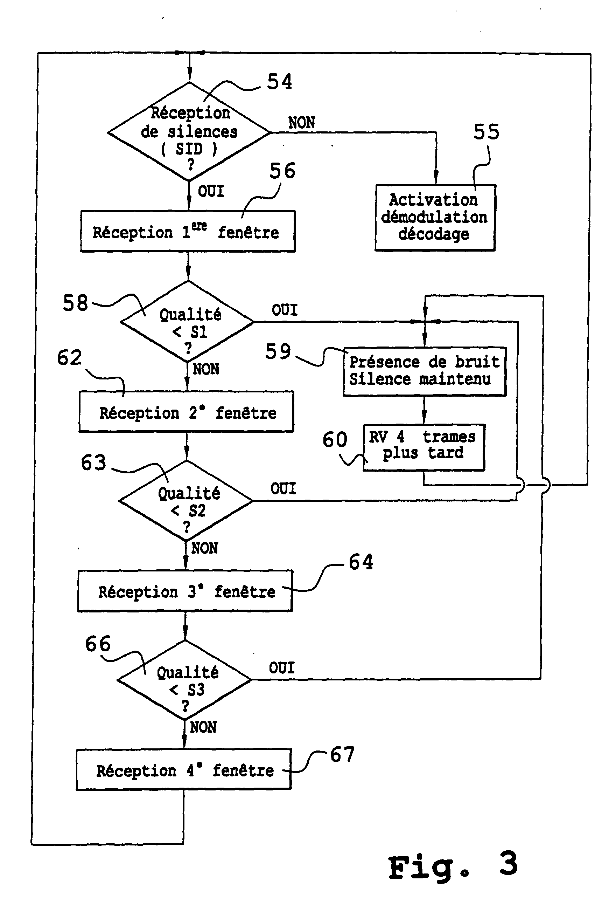

La figure 3 montre la mise en oeuvre particulière du procédé de l'invention dans le cas où le téléphone mobile est en communication, mais où l'interlocuteur distant qui émet à partir de la station de base 18 n'édite pas de signaux. Dans le procédé de l'invention, au cours d'un premier test 54 on cherche à savoir si des signaux de type SID sont reçus. S'ils ne sont pas reçus c'est que la communication est en fonctionnement. Dans ce cas, dans une étape 55 on active la démodulation et le décodage, notamment on ferme les interrupteurs symboliques correspondant 32 et 33. Par contre, si des signaux SID ont été reçus, le téléphone mobile cherche à recevoir dans chaque sous-groupe 48, 50, 51 et 52 de fenêtres temporelles les signaux codés représentatifs des paroles émises, mais seulement si ces signaux codés ont une signification. Dans ce but au cours d'une première étape 56 le téléphone mobile reçoit, et éventuellement démodule et décode, les signaux d'une première fenêtre 57 (sous-groupe 48). La qualité du signal reçu est alors comparé dans un test 58 à un premier seuil S1. Si la qualité est inférieure au seuil S1, ceci signifie qu'on est en présence de bruit. Au cours d'une étape 59 on maintient alors les conditions de silence : c'est-à-dire essentiellement les conditions d'économie d'énergie avec les interrupteurs 32 et 33. Dans ce cas l'interrupteur 32 est ouvert (alors que l'interrupteur 33 n'a éventuellement pas été fermé, et reste ouvert). De plus compte tenu que le niveau du signal a été insuffisant, par une action 60 on décide de fixer un rendez-vous temporel quatre fenêtres temporelles plus tard. Dans la pratique, ceci ne sera le cas que pour passer du sous-groupe 50 au sous-groupe 51 et du sous-groupe 51 au sous-groupe 52. Par contre du sous-groupe 48 au sous-groupe 50, le rendez-vous sera fixé cinq trames plus tard alors que du sous-groupe 52 au sous-groupe 48 il sera fixé treize trames plus tard.

Par contre si la qualité de signal n'est pas si mauvaise, on n'est pas sûr d'être en présence de bruit. Dans ces conditions, il est nécessaire d'organiser la réception d'une deuxième fenêtre 61 dans le même sous-groupe (sous-groupe 48) que celui de la fenêtre 57. Les signaux de cette fenêtre 61 sont reçus, et éventuellement démodulés et décodés, et leur qualité est comparée à un deuxième seuil S2 au cours d'un test 63. Dans les mêmes conditions que précédemment, selon le résultat du test 63, soit on décide de passer à l'étape 59 et à l'étape 60 (cette dernière étant modifiée quant au délai d'attente du rendez-vous), soit, autrement, on décide de passer si la qualité du signal est supérieure au seuil S2 à la réception dans une étape 64 de réception la troisième fenêtre 65. De même que précédemment les signaux résultant de cette troisième fenêtre sont comparés dans un test 66 à un seuil S3, et une décision est prise de recevoir, ou de ne pas recevoir, dans une étape 67 les signaux correspondant à la quatrième fenêtre du bloc considéré.

Cette manière de faire a pour conséquence que, si l'interlocuteur distant n'émet pas, le signal reçu est du bruit et les étapes 59 et 60 mettent le téléphone mobile en sommeil jusqu'à la réception du groupe suivant. Dans ces conditions on effectue une économie d'énergie importante puisqu'on peut ne consommer que le quart d'une énergie de surveillance (due au mode écoute) lors de la communication du téléphone mobile.

Une détermination des seuils de comparaison S1, S2, S3 ainsi que des seuils des étapes 36 et 42 peut être effectué de différentes façons. D'une manière préférée, on quantifiera les signaux reçus, au moment de leur démodulation, sur plus que deux bits, typiquement sur une dynamique de huit bits. Bien que de tels signaux soient sensés représenter seulement des symboles binaires, on introduit de cette façon d'une manière particulièrement efficace les performances de l'algorithme de Viterbi pour conduire à un décodage exact des signaux reçus. L'algorithme de Viterbi donne naturellement un taux d'erreurs bits qu'on peut utiliser comme élément de mesure de la qualité du signal reçu si on choisit de décoder. On peut ensuite comparer ce taux d'erreur bits à un taux de seuil S1, de seuil S2 ou de seuil S3. On peut également effectuer une comparaison entre un décodage de Viterbi selon une quantification des symboles reçus sur huit bits et selon une quantification sur deux bits. La comparaison est effectuée entre les résultats des deux décodages. On détermine la qualité du signal en conséquence. D'autres méthodes sont également connues dans l'état de la technique.

En ce qui concerne le mode de communication, de préférence on choisira un seuil S1 inférieur ou égal au seuil S2, lui-même inférieur ou égal au seuil S3. En effet si les résultats de la première fenêtre 57 sont très mauvais, il s'agit certainement de bruit et il n'est pas nécessaire d'écouter une fenêtre temporelle suivante. Par contre, si les résultats n'ont pas été suffisant pour conduire à un décodage correct et sont cependant supérieur au seuil on les combinera avec les résultats du décodage de la fenêtre temporelle 61. Dans ce cas étant donné qu'avec l'algorithme de Viterbi on peut accéder à une mesure combinée (puisque le train des bits reçus est beaucoup plus important) plus précise, on pourra se montrer plus exigeant pour déterminer s'il faut continuer ou non à recevoir et décoder les fenêtres temporelles suivantes. Il en est de même bien entendu pour la troisième fenêtre temporelle 65 pour laquelle le seuil S3 ne sera pas un seuil relatif à la qualité du signal de cette troisième fenêtre seule mais à la qualité du signal résultant de l'ensemble des trois fenêtres 57, 61 et 65 ensemble.

Pour mesurer la qualité du signal il est également possible de comparer le taux d'erreur bits résultant de la réception des signaux SID, qui sont obligatoirement reçus et décodés, avec la qualité des signaux reçus pendant la fenêtre temporelle 57. On pourra notamment, si la réception des signaux SID a été difficile, considérer que le canal lui-même est bruité et dans ce cas abaisser la valeur du seuil S1, et des seuils S2 et S3, pour en tenir compte. Par contre si la réception des signaux SID a été parfaite, le canal n'est pas bruité, et dans ces conditions les seuils S1, S2 et S3 pourront être plus élevés. En pratique ces seuils sont donc déterminés en fonction de la qualité de réception des signaux SID.

En agissant ainsi on est sûr que le téléphone mobile va d'une part économiser de l'énergie et d'autre part être susceptible de n'utiliser l'énergie de décodage que lorsque l'interlocuteur distant aura repris la parole c'est-à-dire aléatoirement puisque ceci dépend de sa propre initiative.

Dans un autre exemple, pour mesurer la qualité de réception du signal, si on ne veut pas commencer à faire le décodage, on pourra considérer le nombre de passage par zéro du signal quantifié. S'il est supérieur dans une proportion donnée, par exemple au double, du nombre de bits susceptibles d'être reçus, on pourra estimer qu'il s'agit manifestement de bruit. Dans ce cas on n'est pas obligé de décoder. On peut donc lancer la réception par l'interrupteur 32 sans mettre en oeuvre le décodage par l'interrupteur 33 ce qui économise encore de l'énergie.

Toutes les opérations de mesure, en pratique sont effectuées par un programme mis en oeuvre par le microprocesseur 15, et préalablement enregistré dans la mémoire 7.

## Revendications

1. Procédé de réception de signaux de parole dans un téléphone mobile (1), ledit téléphone mobile étant en communication avec un correspondant distant, les signaux de parole émis par le correspondant distant étant répartis dans des fenêtres temporelles situées dans des trames successives, comportant les étapes ordonnées suivantes :
- on reçoit (56) des premiers signaux de parole correspondant à une première fenêtre temporelle,
- on mesure (58) une information de qualité des signaux de parole reçus, comparativement à un premier seuil (S1), et **caractérisé en ce qu'**
- on configure le téléphone mobile pour recevoir ou non des deuxièmes signaux de parole correspondant à une deuxième fenêtre temporelle, selon que ladite information de qualité est respectivement supérieure ou inférieure audit premier seuil.

2. Procédé selon la revendication 1, **caractérisé en ce que** lesdits signaux de parole sont décodés par un décodeur de Viterbi et **en ce que** ladite information de qualité est déterminée par ledit décodeur de Viterbi.

3. Procédé selon la revendication 2, **caractérisé en ce que** ledit premier seuil est obtenu par comparaison d'un décodage de Viterbi avec quantification sur une dynamique plus grande que deux à un décodage de Viterbi avec une dynamique de deux.

4. Procédé selon l'une des revendications 1 à 3, **caractérisé en ce qu'**à la réception desdits deuxièmes signaux de paroles,
- on mesure une deuxième information de qualité des signaux de parole reçus, comparativement à un deuxième seuil (S2), et,
- on configure le téléphone mobile pour recevoir ou non des troisièmes signaux de paroles correspondant à une troisième fenêtre temporelle, en fonction de cette comparaison.

5. Procédé selon la revendication précédente, **caractérisé en ce que** ledit deuxième seuil est un seuil combiné, et est supérieur audit premier seuil.

## Claims

1. A method for receiving speech signals in a mobile telephone, said mobile telephone communicating with a remote correspondent, the speech signals transmitted by the remote correspondent being distributed in time windows located in successive frames, including the following ordered steps:
- first speech signals corresponding to a first time window are received (56),
- information on the quality of the received speech signals is measured (58) comparatively with a first threshold (S1), and **characterized in that**
- the mobile telephone is configured in order to either receive or not second speech signals corresponding to a second time window, according to whether said quality information is respectively larger or less than the first threshold.

2. The method according to claim 1, **characterized in that** said speech signals are decoded in a Viterbi decoder and **in that** said quality information is determined by said Viterbi decoder.

3. The method according to claim 2, **characterized in that** said first threshold is obtained by comparing Viterbi decoding with quantification over a dynamic range larger than two, with Viterbi decoding with a dynamic range of two.

4. The method according to any of claims 1 to 3, **characterized in that** upon receiving said second speech signals,
- a second piece of information on the quality of the received speech signals is measured, comparatively to a second threshold (2) and,
- the mobile telephone is configured for either receiving or not third speech signals corresponding to a third time window, according to this comparison.

5. The method according to the preceding claim, **characterized in that** said second threshold is a combined threshold, and is larger than said first threshold.

## Patentansprüche

1. Verfahren zum Empfangen von Sprachsignalen in einem Mobiltelefon (1), wobei das Mobiltelefon in Kommunikation mit einem entfernten Gesprächspartner steht, die von dem entfernten Gesprächspartner gesendeten Sprachsignale auf zeitfenster verteilt sind, die sich in aufeinander folgenden Rahmen befinden, mit den folgenden geordneten Schritten:
- Empfangen (56) von einem ersten Zeitfenster entsprechenden ersten Sprachsignalen,
- Messen (58) einer Qualitätsinformation der empfangenen Sprachsignale im Vergleich zu einer ersten Schwelle (S1),
**dadurch gekennzeichnet, dass**
- das Mobiltelefon konfiguriert wird, um einem zweiten Zeitfenster entsprechende zweite Sprachsignale zu empfangen oder nicht zu empfangen, je nachdem, ob die Qualitätsinformation oberhalb bzw. unterhalb der ersten Schwelle ist.

2. Verfahren nach Anspruch 1, **dadurch gekennzeichnet, dass** die Sprachsignale von einem Viterbi-Decodierer decodiert werden, und dass die Qualitätsinformation von dem Viterbi-Decodierer festgelegt wird.

3. Verfahren nach Anspruch 2, **dadurch gekennzeichnet, dass** die erste Schwelle erhalten wird durch Vergleich einer Viterbi-Decodierung mit einer Quantisierung auf einer größeren Dynamik als zwei mit einer Viterbi-Decodierung mit einer zweier-Dynamik.

4. Verfahren nach einem der Ansprüche 1 bis 3, **dadurch gekennzeichnet, dass** beim Empfang der zweiten Sprachsignale
- eine zweite Qualitätsinformation der empfangenen Sprachsignale im Vergleich zu einer zweiten Schwelle (S2) gemessen wird, und
- das Mobiltelefon konfiguriert wird, um einem dritten Zeitfenster entsprechende dritte Sprachsignale in Abhängigkeit von diesem vergleich zu empfangen oder nicht zu empfangen.

5. Verfahren nach dem Vorhergehenden Anspruch, **dadurch gekennzeichnet, dass** die zweiten Schwelle eine kombinierte Schwelle und höher als die erste Schwelle ist.
